(19) Europäisches Patentamt European Patent Office Office européen des brevets

(11) **EP 2 407 925 A1**

(12) **EUROPEAN PATENT APPLICATION**

(43) Date of publication:
**18.01.2012 Bulletin 2012/03**

(51) Int Cl.:
*G06T 5/40* (2006.01)     *G06T 5/50* (2006.01)

(21) Application number: **11174223.5**

(22) Date of filing: **15.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.07.2010  JP 2010161705**

(71) Applicant: **Fujifilm Corporation
Minato-ku
Tokyo (JP)**

(72) Inventors:
• **MORITA, Junya
  Kanagawa-ken (JP)**
• **YAMADA, Masahiko
  Kanagawa-ken (JP)**
• **AKAHORI, Sadato
  Kanagawa-ken (JP)**
• **TAKAHASHI, Tomoyuki
  Kanagawa-ken (JP)**

(74) Representative: **Klunker . Schmitt-Nilson . Hirsch
Destouchesstraße 68
80796 München (DE)**

(54) **Radiation image processing apparatus, radiation image processing method, and radiation image processing program**

(57)     A multiple resolution converting means administers multiple resolution conversion on a plurality of radiation images, which are targets of comparison, to generate a plurality of band images having different frequency bands. An image processing means administers image processes on the plurality of band images having corresponding frequency bands to match the appearances thereof, based on anatomical information of structures included in the mammogram MA reconstructing means reconstructs the band images, on which the image processes have

**Description**

BACKGROUND OF THE INVENTION

Field of the Invention

The present invention is related to a radiation image processing apparatus, a radiation image processing method, and a radiation image processing program, for administering image processing on radiation images, such as mammograms, when the radiation images are to be comparatively observed.

Description of the Related Art

Recently, image diagnosis employing mammography apparatuses for imaging breasts is being focused on, in order to promote early detection of breast cancer. Radiation images of breasts (mammograms) imaged by mammography apparatuses undergo image processes at dedicated terminals or the like, and then are transmitted to servers and viewing terminals via networks. Physicians observe the mammograms transmitted to viewing terminals by causing them to be displayed on display screens, to perform diagnosis regarding the presence of disease, such as tumors and calcifications.
Here, the aforementioned image processes are performed such that the mammograms become easier to observe. Specifically, the image processes are performed according to image processing conditions, which are determined such that image properties of observation target regions, such as the density, the contrast, the gradation, the dynamic range, the frequency properties, and noise, become appropriate such that mammograms having desired image quality are obtained.
When diagnosis is performed using radiation images, it is a common practice to compare a plurality of images to observe changes and differences among the images. For example, a plurality of radiation images of a single patient which were imaged at different times may be displayed side by side by a high resolution display device, to perform diagnosis regarding the presence of disease, such as tumors or to perform diagnosis regarding the progression of disease. In addition, in the case of mammograms, diagnosis may be performed by comparing mammograms of the right and left breasts, which are often imaged at the same time.
However, in the case that a past image and a current image are imaged by different models of imaging apparatuses, or imaged by the same imaging apparatus under different imaging conditions, the image properties will greatly differ between the two images. There are cases in which differences in image properties become hindrances to comparative observation, resulting in deteriorations in the accuracy and efficiency of diagnoses. For this reason, various methods have been proposed for performing image processes on mammograms to be comparatively observed such that image properties are matched to cause images to appear in the same manner. For example, a technique has been proposed, in which image processes are administered such that image properties of corresponding regions are matched according to degrees of similarity of tissue and degrees of interest (U.S. Patent Application Publication No. 20090141955).
Meanwhile, a technique has also been proposed, in which radiation images that include bone portions and soft tissue portions are converted into multiple resolutions to generate a plurality of band images having different frequency bands, image processes are administered on the band images such that the contrast is optimal for each of the bone portions and the soft tissue portions, and the processed band images are reconstructed to generate processed radiation images (U.S. Patent No. 7,139,416).
Mammograms include various structures, such as mammary gland regions, fat regions, diseased portions, and pectoral muscle regions. In addition, radiation images other than mammograms obtained by imaging various portions of patients include bone regions and soft tissue regions. Depending on the imaged portion, various other structures, such as blood vessels and mediastina, are included in radiation images as well. The frequency properties of such structures differ in radiation images. For example, mammary gland tissue includes high frequency components, and fatty tissue includes low frequency components. It is necessary to cause the frequency properties to match when matching image properties, because radiation images include various structures having different frequency properties as described above.
However, the technique disclosed in U.S. Patent Application Publication No. 20090141955 administers image processes such that the density and contrast of mammograms to be comparatively observed are matched. Therefore, image processes that match frequency properties cannot be administered. In addition, the technique disclosed in U.S. Patent No. 7, 139, 416 performs multiple resolution conversion, and emphasizes contrast for each structure. That is, this technique is not that which administers image processes suited for comparative observation.

SUMMARY OF THE INVENTION

The present invention has been developed in view of the foregoing circumstances. It is an object of the present invention to administer image processes such that frequency properties are matched, when performing comparative observation of radiation images.

A radiation image processing apparatus of the present invention is characterized by comprising:

multiple resolution converting means, for administering multiple resolution conversion on a plurality of radiation images, which are targets of comparison, to generate a plurality of band images having different frequency bands; image processing means, for administering image processes on the plurality of band images having corresponding frequency bands to match the appearances thereof, based on anatomical information of structures included in the radiation images; and

reconstructing means, for reconstructing the band images, on which the image processes have been administered, to generate processed radiation images.

The "plurality of radiation images which are targets of comparison" may be mammograms of the left and right breasts of a single patient which are imaged within the same time period, or mammograms of a single patient which are imaged during different time periods.

Note that in the radiation image processing apparatus of the present invention, the image processing means may obtain regions that include corresponding structures within the plurality of band images having corresponding frequency bands based on the anatomical information, and administer image processes such that the image properties of the corresponding structures match.

In addition, in the radiation image processing apparatus of the present invention, the image processing means may weight specific structures within the plurality of band images having corresponding frequency bands when administering image processes.

Further, in the radiation image processing apparatus of the present invention, the anatomical information may be information that specifies at least one of mammary glands, fat, and pectoral muscles.

A radiation image processing method of the present invention is characterized by comprising:

administering multiple resolution conversion on a plurality of radiation images, which are targets of comparison, to generate a plurality of band images having different frequency bands; administering image processes on the plurality of band images having corresponding frequency bands to match the appearances thereof, based on anatomical information of structures included in the radiation images; and reconstructing the band images, on which the image processes have been administered, to generate processed radiation images.

Note that the radiation image processing method of the present invention may be provided as a program that causes a computer to execute the method.

The present invention administers multiple resolution conversion on a plurality of radiation images, which are targets of comparison, to generate a plurality of band images having different frequency bands; administers image processes on the plurality of band images having corresponding frequency bands to match the appearances thereof, based on anatomical information of structures included in the radiation images; and reconstructs the band images, on which the image processes have been administered, to generate processed radiation images. That is, image processes are administered that match the appearances of structures included in band images having corresponding frequency bands. Thereby, the frequency properties of corresponding frequency bands are matched among the plurality of processed mammogram. Accordingly, the frequency properties of structures included in radiation images can be matched even if the radiation images include various structures having different frequency properties. As a result, comparative observation of the plurality of mammograms can be performed accurately.

In addition, a configuration may be adopted, wherein the image processing means weights specific structures within the plurality of band images having corresponding frequency bands when administering image processes. In this case, the frequency properties of specific structures can be matched in a prioritized manner, thereby improving the accuracy of comparative observation of the specific structures.

BRIEF DESCRIPTION OF THE DRAWINGS

Figure 1 is a block diagram that schematically illustrates the configuration of a system that includes a radiation image processing apparatus according to an embodiment of the present invention.
Figure 2 is a diagram that schematically illustrates the configuration of a mammography apparatus.
Figure 3 is a diagram that illustrates the interior structure of an imaging base of the mammography apparatus.

Figure 4 is a block diagram that schematically illustrates the functions of an image processing program executed by the radiation image processing apparatus.

Figure 5 is a diagram for explaining multiple resolution conversion.

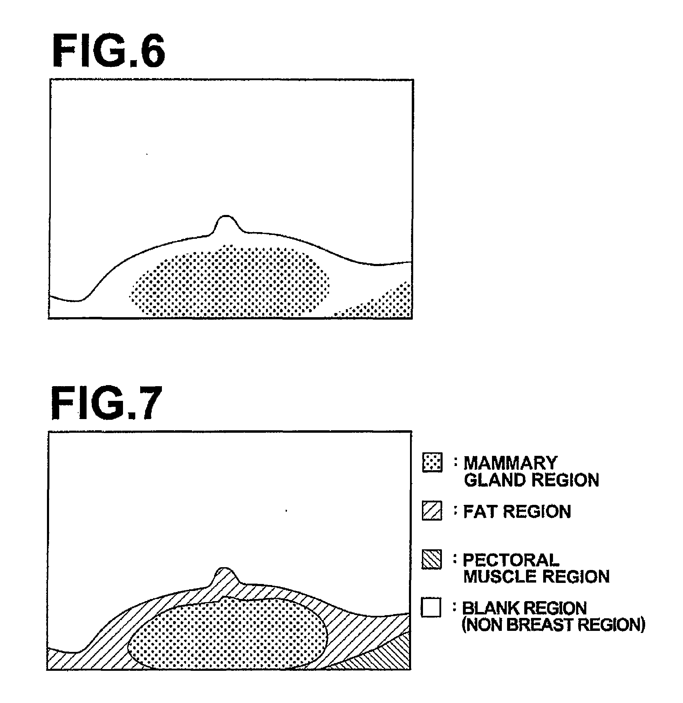

Figure 6 is a diagram that illustrates an example of a mammogram.

Figure 7 is a diagram that illustrates an image, which is a mammogram divided into regions.

Figure 8 is a collection of diagrams that illustrate examples of histograms of a first mammogram.

Figure 9 is a collection of diagrams that illustrate examples of histograms of a second mammogram.

Figure 10 is a collection of diagrams that illustrate examples of histograms of a band image of the first mammogram.

Figure 11 is a collection of diagrams that illustrate examples of histograms of a band image of the first mammogram.

Figure 12 is a diagram for explaining how image processing conditions are set employing cumulative histograms.

Figure 13 is a flow chart that illustrates the steps of a process performed by the radiation image processing apparatus.

DESCRIPTION OF THE PREFERRED EMBODIMENTS

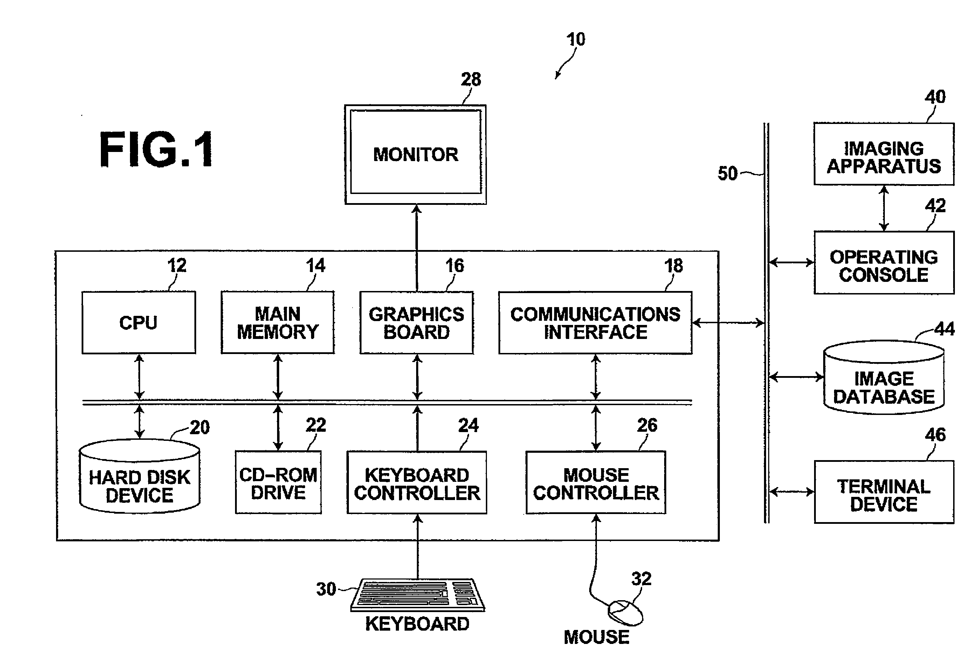

Hereinafter, an embodiment of the present invention will be described with reference to the attached drawings. Figure 1 is a block diagram that schematically illustrates the configuration of a system that includes a radiation image processing apparatus 10 according to an embodiment of the present invention. As illustrated in Figure 1, the system is constituted by: the radiation image processing apparatus 10 of the present invention; a mammography apparatus 40 installed in a medical facility or the like; an console 42 for operating the mammography apparatus 40; an image database 44 (image DB 44) that stores mammograms imaged by the mammography apparatus 40; and a terminal device 46 of a physician that performs image diagnosis, equipped with a high resolution monitor (not shown) .

The radiation image processing apparatus 10 is constituted by a computer such as a work station, equipped with: a central processing unit 12 (CPU 12) that controls the operations of each structural element; a main memory 14 that stores control programs for the apparatus and becomes a work area during execution of programs; a graphics board 16 that controls display of a monitor device 28, such as a liquid crystal display and a CRT display; a communications interface 18 (communications I/F 18) which is connected to a network 50 of the medical facility; a hard disk device 20 that stores various application software including a radiation image processing program of the present invention; a CD-ROM drive 22; a keyboard controller 24 for detecting key operations of a keyboard 30 and outputting them to the CPU 12 as input commands; and a mouse controller 26 for detecting the state of a mouse 32 as a positional input device and output signals indicating the position of a mouse pointer on the monitor device 28, signals indicating the state of the mouse, etc. to the CPU 12.

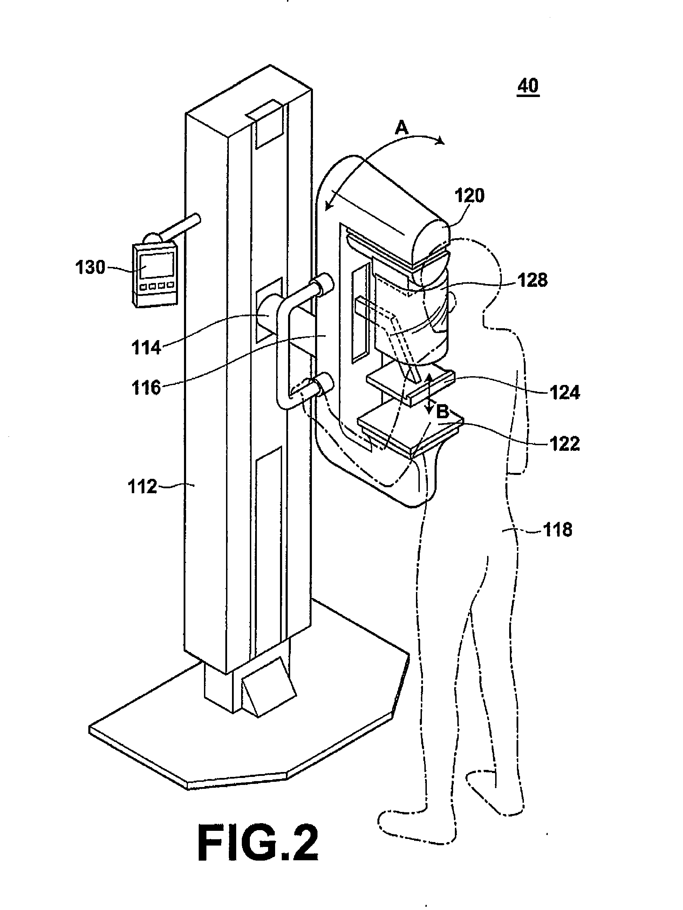

Figure 2 is a diagram that schematically illustrates the configuration of the mammography apparatus 40. As illustrated in Figure 2, the mammography apparatus 40 is equipped with: a base 112 which is installed in an upright state; an arm member 116 which is fixed to a rotating shaft 114 provided at the approximate center of the base 112; an X ray source housing section 120 that houses an X ray source for irradiating radiation (X rays) onto the breast of a subject 118 therein, fixed to an end of the arm member 116; an imaging base 122 that houses a detector that detects X rays which have passed through breasts and obtain X ray image data therein, fixed to the other end of the arm member 116; and a pressing plate 124 that compresses breasts against the imaging base 122.

The arm member 116, on which the X ray source housing section 120, the imaging base 122, and the pressing plate 124 are linked, rotate in the direction indicated by arrow A with the rotating shaft 114 as the center of rotation. Thereby, adjustment of imaging directions with respect to the breasts of the subj ect 118 is enabled. The pressing plate 124 is provided between the X ray source housing section 120 and the imaging base 122 in a state in which it is linked to the arm member 116, and is configured to be displaceable in the direction indicated by arrow B.

A face guard sheet 128 for protecting the face and vicinity of the subject 118 from X ray irradiation is provided on the X ray source housing section 120. In addition, a display device 130 that displays imaging information, such as the imaged portion of the subject 118 and the imaging direction, ID information of the subject 118, and if necessary, information regarding the remaining compression time, that is, the amount of time until the compression of the breast by the pressing plate 124 is released, is provided on the base 112.

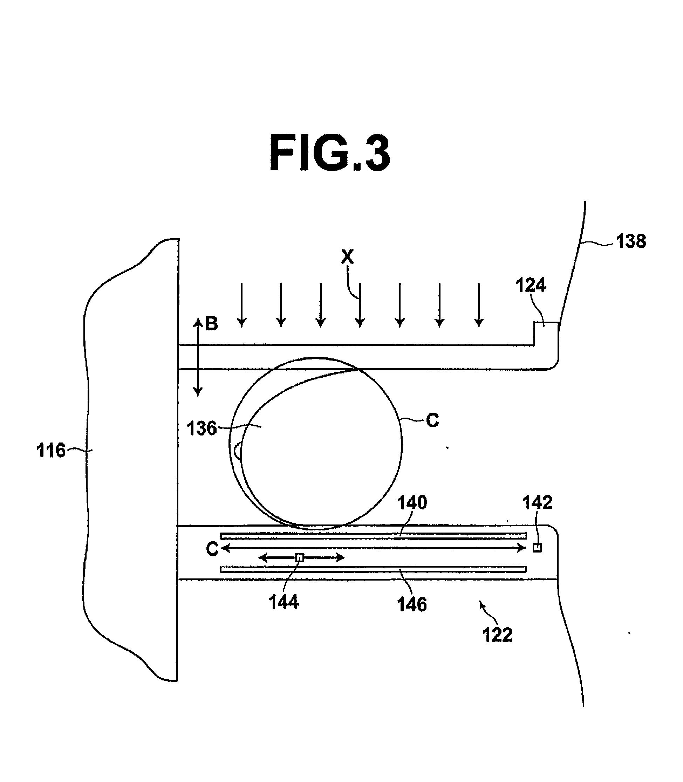

Figure 3 is a diagram that illustrates the interior structure of the imaging base 122 of the mammography apparatus 40. Figure 3 illustrates a state in which a breast 136, which is the portion of the subject 118 to be imaged, is placed between the imaging base 122 and the pressing plate 124. Note that reference number 138 denotes the chest wall of the subject 118.

The interior of the imaging base 122 includes: a detector 140 that stores X ray image information based on X rays which have passed through the breast 136 and outputs the X ray image information as electrical signals; a readout light source section 142 for irradiating readout light onto the detector 140 in order to read out the X ray image information stored thereon; a dosage detector 144 (hereinafter, referred to as AEC (Automatic Exposure Control) sensor 144), for detecting the dosage of X rays which have passed through the breast 136, in order to determine amounts of irradiation time, which is an X ray irradiation condition; and an erasing light source section 146 for irradiating erasing light onto the detector 140 in order to erase the unnecessary electric charges stored thereon.

The detector 140 is a direct conversion optical readout X ray detector that stores X ray image information based on X rays which have passed through the breast 136 as an electrostatic latent image. The detector 140 generates current corresponding to the electrostatic latent image by being scanned with the readout light from the readout light source section 142.

The readout light source section 142 is equipped with: a line light source constituted by a plurality of LED chips which are arranged in a single row; and an optical system that irradiates the readout light output from the line light source onto the detector 140 as a line; for example. The readout light source section 142 exposes and scans the entire surface of the detector 140, by moving the line light source, in which the LED chips are arrayed in a direction perpendicular to the direction in which linear electrodes of a second conductive layer of the detector 140 extend, in the direction in which the linear electrodes extend (the direction indicated by arrow C).

The AEC sensor 144 is configured to be movable along the detector 140 in the direction indicated by arrow C, such that it can be moved to positions corresponding to a portion of the breast 136 having high mammary gland densities to detect X ray dosages, for example. The erasing light source section 146 may be constituted by arranging LED chips that emit and extinguish light within short periods of time and have extremely small amounts of residual light two dimensionally.

X rays which have passed through the breast 136 are detected by the detector 140 as X ray image information, and an X ray image of the breast 136 (a mammogram) is formed by an X ray image forming section (not shown). Erasing light is irradiated onto the detector 140, from which the X ray image information has been read out, by the erasing light source section 146, to erase the remaining X ray image information.

In the case that imaging of the breast of the subject 118 is performed, the subject 118 is positioned, and imaging is performed by operating the console 42 (refer to Figure 1). In addition, the console 42 is equipped with an input means for inputting subject identification information (subject ID) for identifying the subject and an operator ID for identifying the operator. The input subject ID, the input operator ID, and the mammogram obtained by the mammography apparatus 40 are correlated and stored in the image DB 44.

Note that mammograms may be stored as image files (DICOM files) in the DICOM (Digital Image and Communication in Medicine) format. In this case, information, such as the subject ID, the operator ID, the imaging date, and the imaging facility are recorded in the headers of the DICOM files.

Note that the detector 140 is not limited to the direct conversion optical readout type. The detector 140 may alternatively be an imaging plate IP having stimulable phosphors (a stimulable phosphor sheet) or a flat panel X ray detector FPD (Flat Panel Detector), in which a great number of X ray detecting elements that utilize semiconductors or the like are arranged two dimensionally on an X ray detecting surface.

Next, positioning of the subject and imaging procedures will be described. An operator (a radiology technician) sets the mammography apparatus 40 to a predetermined state according to a specified imaging method. With respect to imaging directions for the breast 136, for example, there are cranio caudal (CC) imaging, in which radiation is irradiated from above, medio lateral (ML) imaging, in which radiation is irradiated from the side, and medio lateral oblique (MLO) imaging, in which radiation is irradiated from an oblique direction. The arm member 116 is caused to rotate about the rotating shaft 114 according to the specified imaging direction. Note that Figure 2 illustrates a case in which cranio caudal (CC) imaging is to be performed.

When the above preparations are complete, the subject 118 is guided to the mammography apparatus 40, and positioning of the breast 136 is initiated. That is, the radiology technician places the breast 136 on the imaging base 122, turns a pressing plate movement switch (not shown) ON, to cause the pressing plate 124 to move in the direction indicated by arrow B (refer to Figure 2) with respect to the imaging base 122 and to gradually compress the breast 136.

When a pressure sensor (not shown) detects that a compression pressure necessary for imaging is reached, movement of the pressing plate 124 is ceased, and an enable imaging signal is output. Then, the radiology technician turns an irradiation switch (not shown) ON, to perform radiation imaging of the breast 136.

When mammography is completed, compression of the breast 136 is released, by causing the pressing plate 124 to move in a direction away from the imaging base 122. Note that during imaging of the breast 136, a plurality of imaging operations are performed for a single subject 118, such as CC imaging, ML imaging, and MLO imaging of both the right and left breasts 136 of the subject 118.

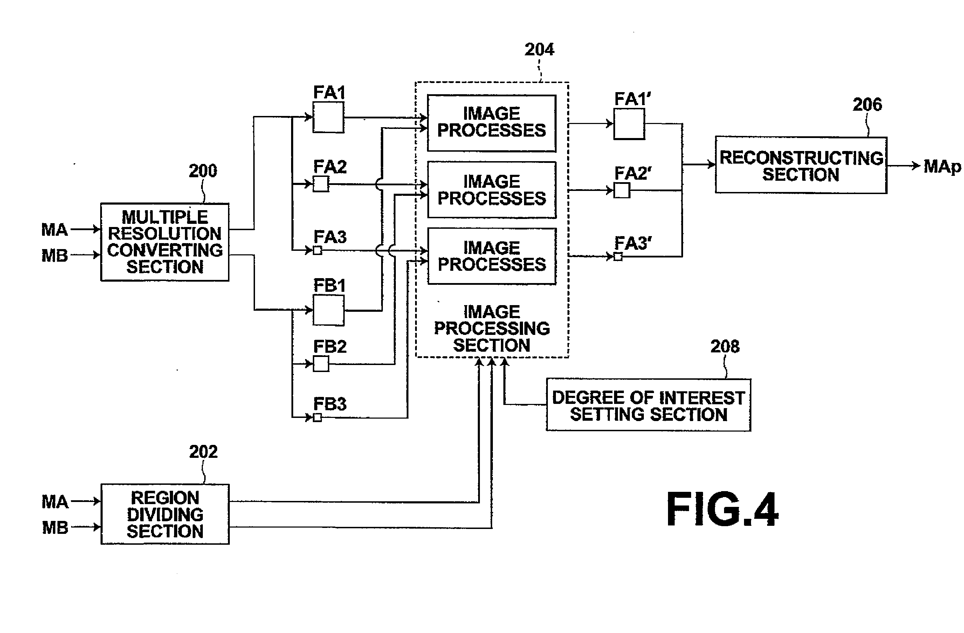

Next, the image processes performed by the radiation image processing apparatus 10 will be described. Figure 4 is a block diagram that schematically illustrates the functions of an image processing program executed by the radiation image processing apparatus 10. As illustrated in Figure 4, the functions of the image processing program executed by the radiation image processing apparatus 10 are executed by a multiple resolution converting section 200, a region dividing section 202, an image processing section 204, a reconstructing section 206, and a degree of interest setting section 208.

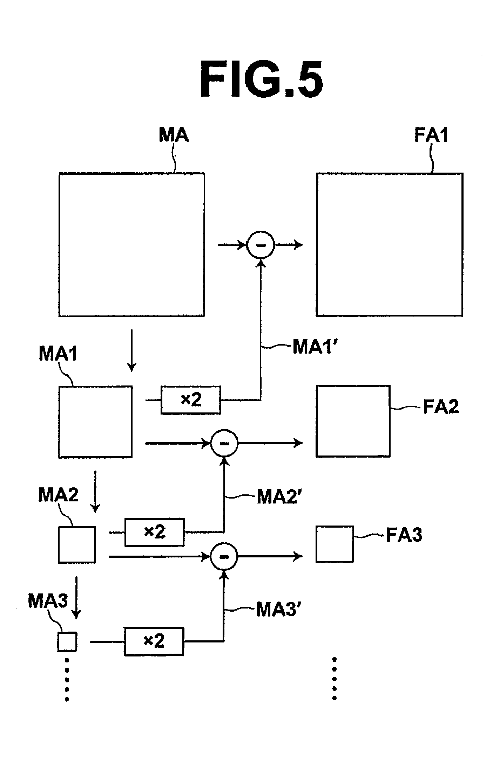

The resolution converting section 200 converts the resolutions of two mammograms (denoted as MA and MB), which are to be targets of comparative observation, into a plurality of band images of different frequency bands. Figure 5 is a diagram for explaining resolution conversion. Note that here, a description will be given only with respect to resolution conversion of the first mammogram MA, because the same resolution conversion process is performed with respect to the second mammogram MB.

First, the resolution converting section 200 performs a filtering process with respect to the mammogram MA using a Gaussian filter in which σ=1, to reduce the mammogram MA to 1/2 its size, and to generate a reduced image MA1. Next, the resolution converting section 200 generates an enlarged image MA1' of the same size as the mammogram MA from the reduced image MA1, by employing interpolating calculations such as tertiary spline interpolation. Then, the enlarged image MA1' is subtracted from the mammogram MA, to generate a first band image FA1. Next, the resolution converting section 200 performs a filtering process with respect to the reduced image MA1 using a Gaussian filter in which σ=1, to reduce the reduced image MA1 to 1/2 its size, and to generate a reduced image MA2. Then, the resolution converting section 200 generates an enlarged image MA2' of the same size as the enlarged image MA1' from the reduced image MA2, to generate an enlarged image MA2'. Next, the enlarged image MA2' is subtracted from the enlarged image MA1', to generate a second band image FA2. Further, the above processes are repeated to generate a plurality of band images FAj (j=1 through n) of a plurality of frequency bands, until band images of desired frequency bands are generated.

Note that the band image of the lowest frequency band does not represent frequency components of the mammogram MA, but is an image which is a reduced mammogram MA. In addition, Figure 4 only illustrates band images FA1 through FA3 and FB1 through FB3 for three frequency bands, for the sake of simplicity. Here, the signal values of each pixel of the mammograms MA and MB and the band images FAn and FBn of the lowest frequency band represent the density of the pixel. The signal values of each pixel of the band images FAj and FBj (j≠n) represent the size of the frequency component of the frequency band at the pixel.

Note that the plurality of band images FAj and FBj may be generated by other resolution converting techniques, such as wavelet conversion. As a further alternative, the plurality of band images of different frequency bands may be generated by filtering processes that reduce the high frequency components of images, without changing the sizes of the mammograms MA and MB.

The region dividing section 202 divides the mammograms MA and MB into breast regions and blank regions employing the technique disclosed in Japanese Unexamined Patent Publication No. 2005-065855, for example. Blank regions exhibit particularly high density within mammograms. Therefore, a peak that appears in the high density side of a density histogram of the entire image corresponds to the blank region. The region dividing section 202 performs a binarizing process employing a value, which is calculated by subtracting a predetermined value from the peak value, as a threshold value to divide the mammograms MA and MB into breast regions and blank regions. Alternatively, searching may be performed from the high density side within a density histogram, and the first point having a value beneath a previously defined value may be employed as the threshold value for performing the binarizing process.

Next, the region dividing section 202 extracts skin lines, which are the outlines of the breast regions. Boundary points between the breast regions and the blank regions are sequentially searched for, and the pixels at the boundary points are connected to extract the skin lines.

Meanwhile, with respect to pectoral muscle regions, the boundaries between pectoral muscle regions and fat regions have comparatively clear edges. Therefore, a differential operator performs scanning from the skin line toward the chest wall, and points having large differential values are extracted as boundary points with the pectoral muscle regions. Then, curves that connect the extracted boundary points are calculated, and the sides of the curve toward the chest wall (the side opposite the blank region) are detected as the pectoral muscle regions.

Next, the region dividing section 202 calculates a threshold value for separating mammary glands from the fat regions based on density values within the pectoral muscle regions and the fat regions in the vicinity thereof. By setting parameters such that the threshold value becomes large, pixels that represent only fatty tissue can be positively extracted. This threshold value is employed to separate the breast regions into mammary gland regions and fat regions.

Note that there are cases in which pectoral muscle regions are not present within mammograms. For this reason, the breast regions may be divided into mammary gland regions and fat regions by a more simple method utilizing a known threshold value determination method (classification analysis and the like), without extracting the pectoral muscle regions.

The image processing section 204 analyzes the band images FAj and FBj, and administers image processes onto the band images FAj and FBj such that the appearances of band images FAj and FBj of corresponding frequency bands are matched. For this reason, the image processing section 204 first sets image processing conditions for matching the appearances of band images FAj and FBj of corresponding frequency bands. Note that here, a case will be described in which image processes are administered only onto the band images FAj such that the appearances thereof will match those of the band images FBj.

First, the image processing section 204 extracts image information from each tissue region (that is, the mammary gland regions, the fat regions, and the pectoral muscle regions) within the band images FAj and FBj. Here, a case will be described in which histograms of the signal values of each of the tissue regions are obtained as the image information. Note that in the present embodiment, the mammograms MA and MB have been divided into the tissue regions by the region dividing section 202. In addition, the pixel positions of tissues can be correlated among the mammograms MA and MB and the band images FAj and FBj. Accordingly, the band images FAj and FBj can be divided into the tissue regions, that is, the mammary gland regions, the fat regions, and the pectoral muscle regions, employing the results of division into regions for the mammograms MA and MB.

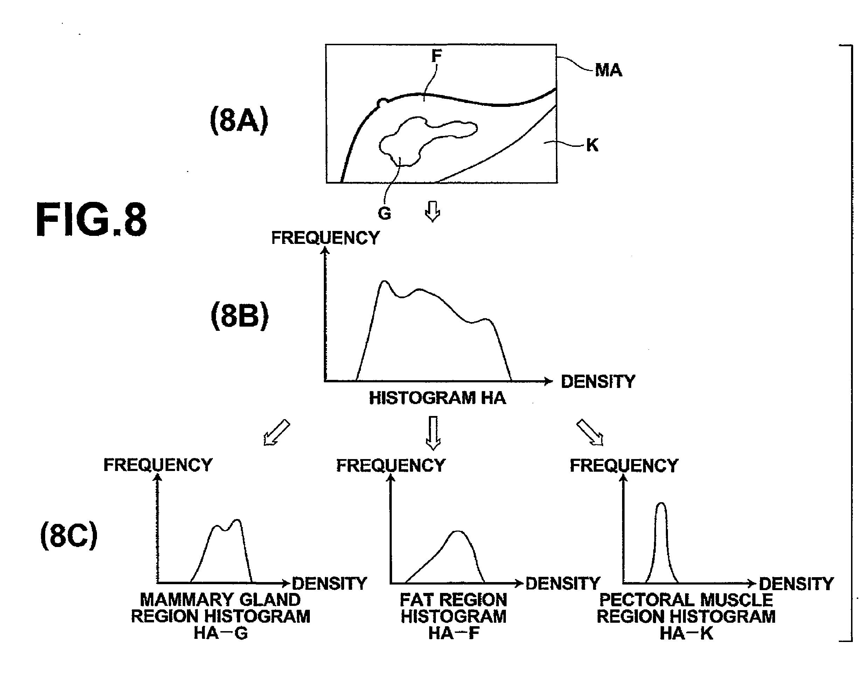

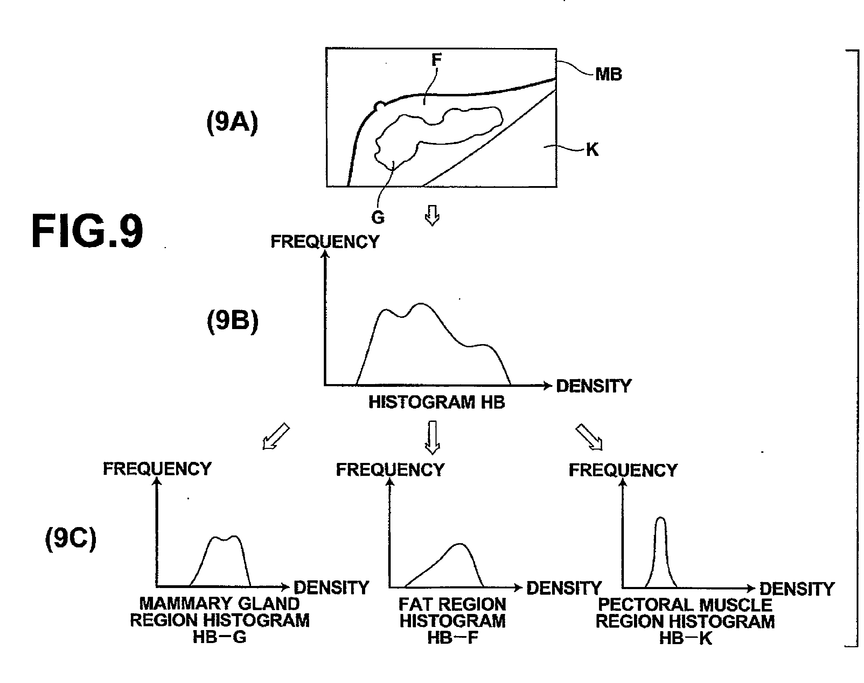

Here, calculation of histograms for the mammograms MA and MB will be described. Mammary glands appear in the mammograms MA and MB as white tissue regions having high brightness values, and fat regions have lower brightness values than the mammary glands. Density values included in each tissue region have a tendency to be distributed within specific ranges, and a histogram HA of density values of the entire breast in the mammogram MA (refer to Figure 8A) is as illustrated in Figure 8B. Further, histograms HA-G, HA-F, and HA-K of the mammary gland region G, the fat region F, and the pectoral muscle region K in the mammogram MA, respectively, are obtained as illustrated in Figure 8C. Similarly, a histogram HB of density values of the entire breast in the mammogram MB (refer to Figure 9A) is as illustrated in Figure 9B. Further, histograms HB-G, HB-F, and HB-K of the mammary gland region G, the fat region F, and the pectoral muscle region K in the mammogram MB, respectively, are obtained as illustrated in Figure 9C.

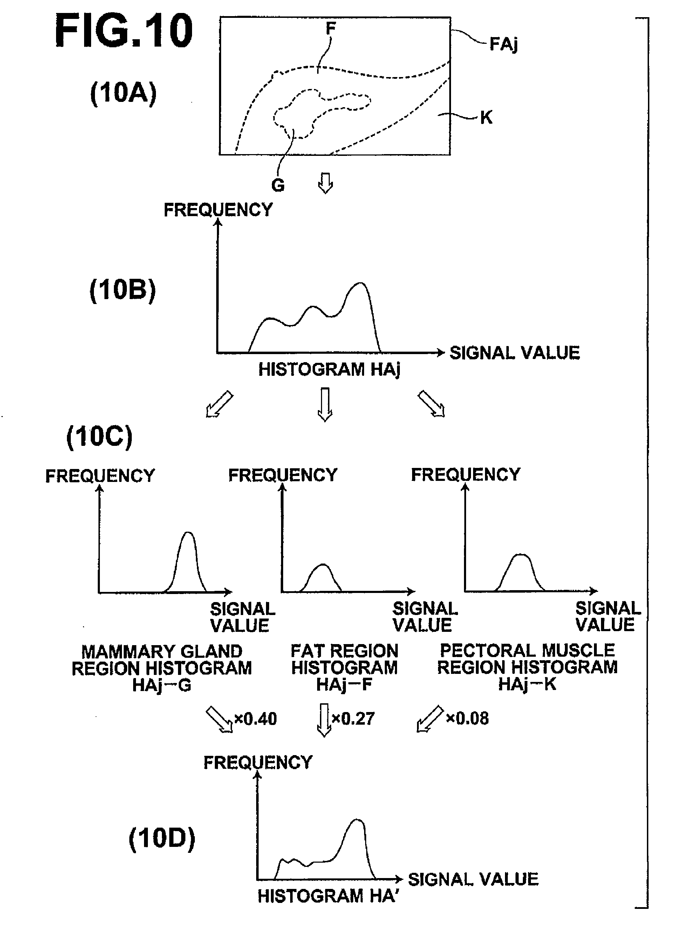

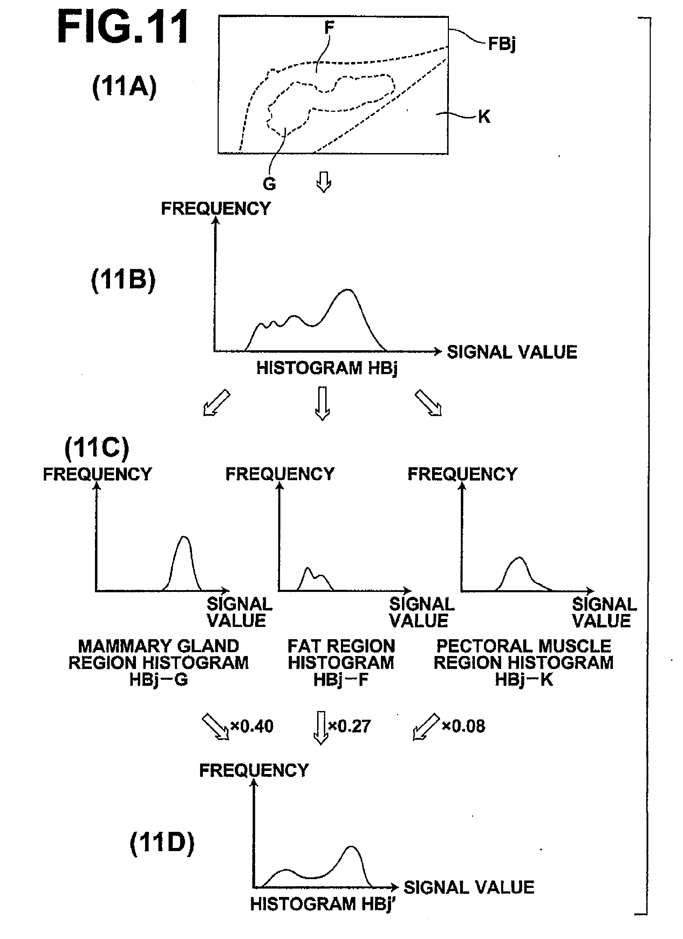

Similarly, histograms can be obtained for the band images FAj and FBj. That is, a histogram HAj of density values of the entire breast in a band image FAj (refer to Figure 10A) is as illustrated in Figure 10B. Further, histograms HAj-G, HAj-F, and HAj-K of the mammary gland region G, the fat region F, and the pectoral muscle region K can be obtained using the results of dividing the mammogram MA into regions (refer to Figure 10C) . Similarly, a histogram HBj of density values of the entire breast in a band image FBj (refer to Figure 11A) is as illustrated in Figure 11B. Further, histograms HBj-G, HBj-F, and HBj-K of the mammary gland region G, the fat region F, and the pectoral muscle region K can be obtained using the results of dividing the mammogram MB into regions (refer to Figure 11C).

Next, the image processing section 204 sets weighting for each tissue region within corresponding pairs of band images FAj and FBj, according to degrees of interest. Then, the image processing section 204 utilizes the image information regarding each tissue region of the band images FAj and FBj according to the weighting thereof, to set image processing conditions such that the image properties of the band images FAj and FBj will match. For example, in the case that the degree of interest is set to 1 for mammary gland regions and 0 for all other regions, the image processing conditions are set with respect to only the mammary gland regions within the band images FAj and FBj, based on the results of division into regions obtained by the region dividing section 202. Note that here, the degree of interest was set to 1 for the mammary gland regions and set to 0 for the other regions. Alternatively, the degree of interest for the mammary gland regions may be set to 0.8 and set to 0.2 for the pectoral muscle regions, and the image processing conditions may be set by calculating weighted averages of image processing conditions obtained from the mammary gland regions and image processing conditions obtained from the pectoral muscle regions within the band images FAj and FBj. Note that the weights may be set for each of the tissue regions, which are determined by the region dividing means 202 in advance, and saved in a table or the like. In addition, weights may be set for each image according to the degrees of similarity and the degrees of interest of each tissue region within the band images FAj and FBj, employing the technique disclosed in U.S. Patent Application Publication No. 20090141955. In the case that the technique disclosed in U.S. Patent Application Publication No. 20090141955 is employed, the weight of each tissue region is set as (degree of similarity) x (degree of interest), using the degree of similarity and the degree of interest of the aspect (the area or the shape) of each tissue region. Then, the image processing conditions are set according to the degree to which the image properties of each tissue region are to be matched.

Note that the degrees of interest are set for each tissue region, by a user performing input to the radiation image processing apparatus 10 using the keyboard 30. The degree of interest setting section 208 sets the degree of interest for each tissue region based on the user input. In the case of breasts, tumors are likely to be present in mammary gland regions, in which large numbers of mammary glands are present, and therefore the degree of interest for the mammary gland regions become higher than that for other regions. Therefore, the degrees of interest are set such that the influence of regions for which there is little interest, such as the fat regions and the pectoral muscle regions, are reduced, in order to facilitate observation of regions of interest, such as the mammary gland regions.

Meanwhile, in the case that the mammograms MA and MB are of the same breast of a single patient and a tumor is present in one of the two mammograms, it is often the case that the tumor has density values similar to those of mammary glands and appears overlapping a mammary gland region. Therefore, when the mammograms MA and MB are divided into regions, division is performed such that the tumor is included in the mammary gland region. For this reason, it is considered that the area of the mammary gland region in which the tumor is present will be greater than the area of the mammary gland region in which the tumor is not present. Therefore, the degree of similarity is derived according to Formula (1) below, for example. Note that in Formula (1), Area 1 and Area 2 are the areas of the tissue regions for which the degree of similarity is calculated.

$$\text{Degree of Similarity} = 1 - 2 \times |\text{Area 1} - \text{Area 2}| / (\text{Area 1} + \text{Area 2}) \qquad (1)$$

Here, when the appearances of the images of the same portion are matched, it is often the case that not only the density values, but also the contrast and gradation are similar. Accordingly, in the case that the appearances of band images having corresponding frequency band are matched, it is often the case that not only the signal values but also the contrast and gradation are similar. For this reason, a method by which image processing conditions are set from histograms of the signal values of each tissue region obtained from the band images FAj and FBj of the two mammograms MA and MB to be compared and the weights of each tissue region within the band images FAj and FBj such that the signal values, the contrast, and the gradation approximate each other more closely for tissue regions having greater weights is provided.

First, a histogram HA' (refer to Figure 10D) is obtained by multiplying the histograms for each tissue region of the band image FAj illustrated in Figure 10C by their weights (0.40, 0.27, and 0.08, for example). Similarly, a histogram HB' (refer to Figure 11D) is obtained by multiplying the histograms for each tissue region of the band image FBj illustrated in Figure 11C by their weights. Then, the signal values of the band image FAj are adjusted such that the histogram HA' and the histogram HB' are matched. The influence of tissue regions having greater weights can be increased, and the influence of tissue regions having lesser weights can be decreased, by performing adjustments in this manner.

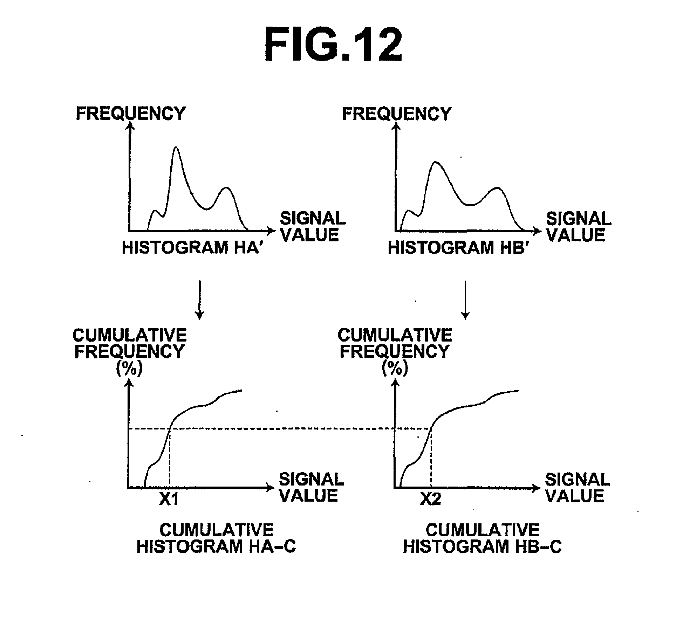

Specifically, cumulative histograms HA-C and HB-C are generated as illustrated in Figure 12. Then, the adjustment is realized by converting the signal values of one of the band images (FAj) to the signal values of the same cumulative frequencies of the other band images (FBj). If a signal conversion table is generated, in which all signal values X1->x2(x2->x1), the histogram HA' can be caused to match the histogram HB'. The signal conversion table generated in this manner is set as the image processing conditions for the band images FAj and FBj for the frequency bands thereof.

The image properties of the band images FAj and FBj can be caused to approximate each other, while suppressing the influence of regions for which reference is not desired due to differences in positioning and the like, by generating the weighted histograms for the band images FAj and FBj for each frequency band and determining the image processing conditions in this manner. This corresponds to matching the frequency properties of a certain frequency band of the mammograms MA and MB. Accordingly, the frequency properties can be matched in processed mammograms MA and MB such that the influence of regions having high degrees of interest is great, by reconstructing the processed band images FAj and FBj as will be described later.

Meanwhile, the band images FAn and FBn of the lowest frequency band are reduced images of the mammograms MA and MB, and the signal values of each pixel represent the density of the pixel. Accordingly, the image properties of the mammograms MA and MB can be caused to approximate each other as a whole, by calculating a signal conversion table for the band images FAn and FBn of the lowest frequency band and by administering image processes on the band images FAn and FBn using the calculated signal conversion table. Accordingly, the density, gradation, and contrast properties can be matched in processed mammograms MA and MB such that the influence of regions having high degrees of interest is great, by reconstructing the processed band images FAj and FBj as will be described later.

Note that here, setting of image processing conditions for matching image properties such as signal values, contrast, and gradation of the one of the pairs of band images of each frequency band to the other of the pairs by matching the weighted histograms has been described. Alternatively, the image processing conditions may be set such that the image properties of both of the pairs of the band images match a specific reference image.

The image processing section 204 administers image processes according to the set signal conversion tables on one of the pairs of band images FAj and FBj such that the appearances of the band images FAj and FBj of each frequency band are matched. For example, in the case that the signal conversion table is generated using the cumulative histograms as illustrated in Figure 12, image processes are administered only onto the band images FAj, to generate processed band images FApj. Note that in the case that the image processing conditions are set such that the image properties of both the pairs of the band images match a reference image, image processes are administered on both of the pairs of band images FAj and FBj, to generated processed band images FApj and FBpj.

The reconstructing section 206 reconstructs the processed band images FApj and FBpj by performing a process inverse to that illustrated in Figure 5, to generate processed mammograms MAp and MBp. Specifically, in the case that image processes are administered only onto the band images FAj, the processed band image FApn of the lowest frequency band is enlarged to generate an enlarged image FApn" which is added to a processed band image FApn-1 of the next frequency band to generate a reduced image FApn-1'. Then, the reduced image FApn-1' is enlarged to generate an enlarged image FApn-1", which is added to a processed band image FApn-2 of the next frequency band to generate a reduced image FApn-2'. The processed mammogram MAp is generated by repeating these steps up to the processed band image FApl of the highest frequency band.

Meanwhile, in the case that image processes are administered to the band images FBj, reconstruction is performed in the same manner for the processed band images FBpj as that for the processed band images FApj, to generate the processed mammogram MBp.

Note that the CPU 12 functions as the multiple resolution converting section 200, the region dividing section 202, the image processing section 204, the reconstructing section 206, and the degree of interest setting section 208 of the radiation image processing apparatus 10, by executing an image processing program.

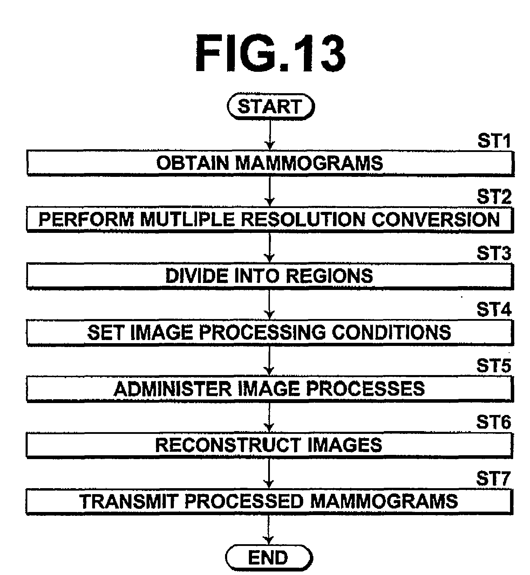

Next, the steps of the process performed by the radiation image processing apparatus 10 of the present embodiment will be described. Figure 13 is a flow chart that illustrates the steps of the process performed by the radiation image processing apparatus 10. Here, a process which is performed in the case that comparative observation is performed at the terminal device 46 using mammograms which are stored in the image DB 44 will be described. Note that the mammograms to be comparatively observed may be the left and right breasts of a single patient which were obtained during the same time period, or two mammograms of the same patient having different imaging time periods. The CPU 12 initiates the process when a comparative observation command is input from the terminal device 46. First, two mammograms which are the targets of comparative observation are obtained from the image DB 44 (step ST1). Then, the CPU 12 performs multiple resolution conversion on the two mammograms MA and MB, to generate the band images FAj and FBj (step ST2) . Further, the CPU 12 divides the mammograms MA and MB into regions (step ST3). Note that the process of step ST3 may be performed first, or the processes of step ST2 and step ST3 may be performed in parallel.

Next, the CPU 12 sets image processing conditions of image processes to be administered to the band images FAj and FBj of each frequency band according to the results of division into regions (step ST4). Thereafter, the CPU 12 administers image processes on the band images FAj and FBj of each frequency band according to the set image processing conditions, to generate the processed band images FAj' and FBj'. Then, the CPU 12 reconstructs the processed band images FAj' and FBj', to generate the processed mammograms MAp and MBp (step ST6).

Finally, the CPU transmits the processed mammograms to the terminal device 46 (step ST7), and the process ends. The transmitted mammograms are displayed by the monitor of the terminal device 46, and a physician performs comparative image observation.

The present embodiment administers multiple resolution conversion on the mammograms MA and MB, which are the targets of comparison, to generate the plurality of band images FAj and FBj of different frequency bands. Then, image processes are administered on the band images FAj and FBj using image processing conditions that cause the image properties of mammary gland tissue, fat tissue, and pectoral muscle tissue included in the mammograms MA and MB to be matched. Then, the processed band images FApj and FBpj are reconstructed to generate the processed mammograms MAp and MBp

That is, image processes are administered that match the appearances of structures included in band images FAj and FBj having corresponding frequency bands. Thereby, the frequency properties of corresponding frequency bands are matched among the processed mammograms MAp and MBp. Accordingly, the frequency properties of structures included in the mammograms MAp and MBp can be matched even if the mammograms MA and MB include various structures having different frequency properties. As a result, comparative observation of the mammograms MA and MB can be performed accurately.

Note that in the embodiment described above, a configuration is adopted wherein each of the tissue regions are weighted according to the degrees of similarity and degrees of interest when setting the image processing conditions. Alternatively, the weights for each tissue region may be set in advance. In this case, it is preferable for modes that weight each of the tissue regions, such as a mode that weights mammary gland regions and a mode that weights fat regions, to be prepared in advance, and for a user (physician) to be enabled to select one of the modes according to a region for which the degree of interest is high.

In the embodiment described above, the mammography apparatus was described as an example of the radiation imaging apparatus. However, the present invention is not limited to this configuration, and may be applied to radiation images input from radiation imaging apparatuses other than mammography apparatuses.

Further, the present invention is not limited to the embodiment described above. Various improvements and modifications are possible as long as they do not stray from the spirit and the scope of the inventions claimed below.

**Claims**

1. A radiation image processing apparatus, **characterized by** comprising:

multiple resolution converting means (200), for administering multiple resolution conversion on a plurality of radiation images, which are targets of comparison, to generate a plurality of band images having different frequency bands;
image processing means (204), for administering image processes on the plurality of band images having corresponding frequency bands to match the appearances thereof, based on anatomical information of structures included in the radiation images; and
reconstructing means (206), for reconstructing the band images, on which the image processes have been administered, to generate processed radiation images.

2. A radiation image processing apparatus as defined in Claim 1, **characterized by**:

the image processing means (204) obtaining regions that include corresponding structures within the plurality of band images having corresponding frequency bands based on the anatomical information, and administering image processes such that the image properties of the corresponding structures match.

3. A radiation image processing apparatus as defined in Claim 2, **characterized by**:

the image processing means (204) weighting specific structures within the plurality of band images having corresponding frequency bands when administering image processes.

4. A radiation image processing apparatus as defined in any one of Claim 1 through Claim 3, **characterized by**:

the anatomical information being information that specifies at least one of mammary glands, fat, and pectoral muscles.

5. A radiation image processing apparatus as defined in any one of Claim 1 through Claim 4, **characterized by**:

the plurality of radiation images which are targets of comparison are one of mammograms of the left and right breasts of a single patient which are imaged within the same time period, and mammograms of a single patient which are imaged during different time periods.

6. A radiation image processing method, **characterized by** comprising:

administering multiple resolution conversion on a plurality of radiation images, which are targets of comparison, to generate a plurality of band images having different frequency bands;
administering image processes on the plurality of band images having corresponding frequency bands to match the appearances thereof, based on anatomical information of structures included in the radiation images; and reconstructing the band images, on which the image processes have been administered, to generate processed radiation images.

7. A radiation image processing program, **characterized by** causing a computer to execute the procedures of:

administering multiple resolution conversion on a plurality of radiation images, which are targets of comparison, to generate a plurality of band images having different frequency bands;
administering image processes on the plurality of band images having corresponding frequency bands to match the appearances thereof, based on anatomical information of structures included in the radiation images; and reconstructing the band images, on which the image processes have been administered, to generate processed radiation images.

# FIG.1

MONITOR — 28

CPU — 12
MAIN MEMORY — 14
GRAPHICS BOARD — 16
COMMUNICATIONS INTERFACE — 18

HARD DISK DEVICE — 20
CD-ROM DRIVE — 22
KEYBOARD CONTROLLER — 24
MOUSE CONTROLLER — 26

KEYBOARD — 30
MOUSE — 32

IMAGING APPARATUS — 40
OPERATING CONSOLE — 42
IMAGE DATABASE — 44
TERMINAL DEVICE — 46

50

10

EP 2 407 925 A1

**FIG.2**

# FIG.3

FIG.4

# FIG.5

MA               FA1

MA1

×2    MA1′

FA2

MA2

×2    MA2′

FA3

MA3

×2    MA3′

# FIG.6

# FIG.7

⊞ : MAMMARY GLAND REGION

▨ : FAT REGION

▧ : PECTORAL MUSCLE REGION

☐ : BLANK REGION (NON BREAST REGION)

# FIG.8

(8A)

(8B)

HISTOGRAM HA

(8C)

MAMMARY GLAND REGION HISTOGRAM HA−G

FAT REGION HISTOGRAM HA−F

PECTORAL MUSCLE REGION HISTOGRAM HA−K

EP 2 407 925 A1

**FIG.9**

**(9A)**

F

MB

K

G

⇩

FREQUENCY

**(9B)**

DENSITY

**HISTOGRAM HB**

⬊ ⬇ ⬊

FREQUENCY

FREQUENCY

FREQUENCY

**(9C)**

DENSITY

DENSITY

DENSITY

MAMMARY GLAND
REGION HISTOGRAM
HB−G

FAT REGION
HISTOGRAM
HB−F

PECTORAL MUSCLE
REGION HISTOGRAM
HB−K

EP 2 407 925 A1

# FIG.10

**(10A)**

F
FAj
K
G

⬇

FREQUENCY

**(10B)**

SIGNAL VALUE

HISTOGRAM HAj

⬋ ⬇ ⬊

**(10C)**

FREQUENCY

SIGNAL VALUE

MAMMARY GLAND
REGION HISTOGRAM
HAj−G

FREQUENCY

SIGNAL VALUE

FAT REGION
HISTOGRAM
HAj−F

FREQUENCY

SIGNAL VALUE

PECTORAL MUSCLE
REGION HISTOGRAM
HAj−K

⬊×0.40   ⬇×0.27   ⬈×0.08

FREQUENCY

**(10D)**

SIGNAL VALUE

HISTOGRAM HA′

# FIG.11

(11A)

F

FBj

K

G

⇩

FREQUENCY

(11B)

SIGNAL VALUE

HISTOGRAM HBj

⬋ ⬇ ⬊

(11C)

FREQUENCY

SIGNAL VALUE

MAMMARY GLAND REGION HISTOGRAM HBj−G

FREQUENCY

SIGNAL VALUE

FAT REGION HISTOGRAM HBj−F

FREQUENCY

SIGNAL VALUE

PECTORAL MUSCLE REGION HISTOGRAM HBj−K

⬊×0.40   ⬇×0.27   ⬈×0.08

FREQUENCY

(11D)

SIGNAL VALUE

HISTOGRAM HBj'

# FIG.12

FREQUENCY

HISTOGRAM HA'　SIGNAL VALUE

FREQUENCY

HISTOGRAM HB'　SIGNAL VALUE

CUMULATIVE FREQUENCY (%)

X1　SIGNAL VALUE

CUMULATIVE HISTOGRAM HA-C

CUMULATIVE FREQUENCY (%)

X2　SIGNAL VALUE

CUMULATIVE HISTOGRAM HB-C

# FIG.13

START

ST1
OBTAIN MAMMOGRAMS

ST2
PERFORM MUTLIPLE RESOLUTION CONVERSION

ST3
DIVIDE INTO REGIONS

ST4
SET IMAGE PROCESSING CONDITIONS

ST5
ADMINISTER IMAGE PROCESSES

ST6
RECONSTRUCT IMAGES

ST7
TRANSMIT PROCESSED MAMMOGRAMS

END

Europäisches
Patentamt

European
Patent Office

Office européen
des brevets

# EUROPEAN SEARCH REPORT

Application Number

EP 11 17 4223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOGHE A A ET AL: "Elastic registration of 2D abdominal CT images using hybrid feature point selection for liver lesions", ADVANCE COMPUTING CONFERENCE (IACC), 2010 IEEE 2ND INTERNATIONAL, IEEE, PISCATAWAY, NJ, USA, 19 February 2010 (2010-02-19), pages 337-341, XP031643569, ISBN: 978-1-4244-4790-9 * abstract; figure 1 * * paragraphs [II.B.], [III.], [III.B.], [0IV.] * | 1-7 | INV. G06T5/40 G06T5/50 |
| A | JOHN J HEINE ET AL: "Multiresolution Statistical Analysis of High-Resolution Digital Mammograms", IEEE TRANSACTIONS ON MEDICAL IMAGING, IEEE SERVICE CENTER, PISCATAWAY, NJ, US, vol. 16, no. 5, 1 October 1997 (1997-10-01), XP011035657, ISSN: 0278-0062 * abstract; figure 5 * * paragraphs [III.A.], [0VI.] * | 1-7 | |
| A | DE 10 2006 005803 A1 (SIEMENS AG [DE]) 9 August 2007 (2007-08-09) * abstract * * paragraphs [0001], [0006], [0011] * | 1-7 | TECHNICAL FIELDS SEARCHED (IPC) G06T |
| A | DE 103 05 221 A1 (UNIV MAGDEBURG TECH [DE]; PHYSIKALISCH TECH BUNDESANSTAL [DE] GSF FORS) 26 August 2004 (2004-08-26) * abstract; claims 1,2 * * paragraphs [0001], [0007], [0009], [0018], [0021] * | 1-7 | |

-/--

The present search report has been drawn up for all claims

| Place of search | Date of completion of the search | Examiner |
|---|---|---|
| Munich | 6 December 2011 | Casteller, Maurizio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 11 17 4223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2007 061935 A1 (SIEMENS AG [DE]) 25 June 2009 (2009-06-25) * abstract * * paragraphs [0007] - [0009], [0011] - [0015] * ----- | 1-7 | |
| A | EP 0 971 316 A2 (GEN ELECTRIC [US]) 12 January 2000 (2000-01-12) * abstract; claim 1 * * paragraphs [0003], [0005], [0007] * ----- | 1-7 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 6 December 2011 | Casteller, Maurizio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 11 17 4223

This annex lists the patent family members relating to the patent documents cited in  the above-mentioned European search report.
The members are as contained in the European Patent Office EDP file on
The European Patent Office is in no way liable for these particulars which are merely given for the purpose of information.

06-12-2011

| Patent document cited in search report | Publication date | Patent family member(s) | Publication date |
|---|---|---|---|
| DE 102006005803 A1 | 09-08-2007 | CN 101017568 A<br>DE 102006005803 A1<br>JP 2007209755 A<br>US 2007189635 A1 | 15-08-2007<br>09-08-2007<br>23-08-2007<br>16-08-2007 |
| DE 10305221 A1 | 26-08-2004 | NONE | |
| DE 102007061935 A1 | 25-06-2009 | DE 102007061935 A1<br>US 2009161935 A1 | 25-06-2009<br>25-06-2009 |
| EP 0971316 A2 | 12-01-2000 | CA 2276634 A1<br>EP 0971316 A2<br>JP 2000059631 A<br>US 6175658 B1 | 10-01-2000<br>12-01-2000<br>25-02-2000<br>16-01-2001 |

For more details about this annex : see Official Journal of the European Patent Office, No. 12/82

**EP 2 407 925 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090141955 A
- US 7139416 B
- JP 2005065855 A